# EUROPEAN PATENT APPLICATION

(11) **EP 2 620 560 A1**
(43) Date of publication of application: **31.07.2013**
(21) Application number: 11826385.4
(22) Date of filing: 15.09.2011
(51) Int. Cl.: E03D 5/09, F16K 7/10

(54) **A PNEUMATIC PUSH BUTTON WITH AIR COMPENSATING STRUCTURE**

(30) Priority: 26.09.2010 CN 201020543176 U
(71) Applicant: Li, Feiyu, Haicang District, Xiamen, Fujian 361022 (CN)
(72) Inventor: CHI, Shangfei, Xiamen Fujian 361022 (CN)
(74) Representative: Verscht, Thomas Kurt Albert
(86) International application number: PCT/CN2011/079651
(87) International publication number: WO 2012/037858

(57) **Abstract**

Disclosed is a pneumatic push button with air compensating structure, comprising a plunger (1), an upper cover (2), a body (5), and a spring (4). The upper cover (2) is fixedly attached to the body (5). An air outlet is provided at the bottom of the body (5). The spring (4) is installed inside the chamber of the body (5). The pneumatic push button with an air compensating structure further comprises a seal (3). A guide hole (21) is provided on the upper cover (2). The plunger (1) is movably installed inside the guide hole (21), and the bottom of the plunger (1) extends into the chamber of the body (5). The spring is tensely arranged between the plunger (1) and the inner wall of the bottom of the body (5). A groove (11) is provided around the bottom of the plunger (1), and the seal (3) movably fits into the groove (11) so that the seal slides along the inner wall of the body (5) in a sealed manner with the up and down movement of the plunger (1) and mates with the inner wall of the groove (11) to form a sealed air path or an open air path. The pneumatic push button features a simple structure, swift air compensation and reliability.

## Description

### FIELD OF THE INVENTION

The present invention relates to a starting device of the flushing mechanism, more particular to a pneumatic button with reinflation structure.

### BACKGROUND OF THE INVENTION

At present, most of the starting mechanism of the flushing mechanism are mechanical, so the mounting of the starting mechanism is limited to near the flushing mechanism with big limitation. The pneumatic force-transmitting starting mechanism used in the flushing mechanism is the pneumatic button which is provided with convenient and quick mounting and good reliability, especially the location of the button is not limited by the mounting position, and can be fixed according to the height or direction that users need, it can even be mounted in another room or floor, so it is provided with better practicability and conveniences. During the using process, the air compression part in the air cavity of the pneumatic button and the pushing part of the drain valve undergoes the extrusion of outer force, and the air connected with the tube is compressed, so that a little air in the cavity can leak out of the sealing body, so that the air volume is reduced, the air pressure is decreased, and the force-transmitting effect of which the media is air is affected; and it can not make sure that the button can reset quickly or react sensitively after the button is loosen, so the air volume and the pressure must be supplied and balanced after the working process.

The object of the present invention is to offer a pneumatic button with reinflation structure with sensitive reinflation, reliable and simple structure to overcome the problems mentioned above.

### SUMMARY OF THE INVENTION

The object of the present invention is to offer a pneumatic button with reinflation structure which overcomes the defect at prior art; in the present invention, a sealing piece is mounted between the plunger and the body, and is coupling with the plunger and the body, so that the automatically reinflation and the smooth reset after the button is pressed are achieved, and then the defects at prior art is solved.

The technical proposal solving the technical matter in the present invention is: a pneumatic button with reinflation structure, comprises a plunger, an upper cover, a body and a spring; the upper cover is fixedly connected to the body; an air outlet is arranged at the bottom end of the body; the spring is arranged in the cavity of the body; also comprises a sealing piece; a guiding hole is opened on the upper cover, the plunger is sleeved in the guiding hole in a moving manner, and the bottom part of the plunger extends into the cavity of the body; the spring is arranged between the bottom end of the plunger and the inner bottom wall of the body; a groove is arranged around the circumference of the bottom of the plunger, and the sealing piece is coupling in the groove in a moving manner, so that the sealing piece can slides on the inner wall of the body in a sealing manner along with the moving of the plunger, coupling with the groove wall of the groove to generate sealed or opened airflow channel.

In a preferred embodiment, it further comprises a first convex ring which is arranged between the top surface of the sealing piece and the upper groove wall of the groove to seal or open the airflow channel along with the up and down movement of the plunger.

The first convex ring is arranged on the top surface of the sealing piece and is coupling below the upper groove wall of the groove to leave or be against the upper groove wall of the groove along with the up and down movement of the plunger.

The first convex ring is arranged under the upper groove wall of the groove, and the first convex ring leaves or is against the upper groove wall of the groove along the up and down movement of the plunger.

The sealing piece is coupling with the groove bottom of the groove with clearance; and an air inflow structure is also arranged in the groove.

The air inflow structure is one or plurality of through holes arranged at the groove bottom of the groove; a countersink is upward opened on the bottom surface of the plunger; the through holes of the groove are communicated with the countersink.

The air inflow structure also can be one or plurality of slots which are arranged on the lower groove wall of the groove along the radial direction.

A second convex ring is arranged on the outer side wall of the sealing piece, which is coupling with the inner side wall of the body in a sealing manner.

A plurality of barbs are arranged on the circumference of the top part of the outer side wall of the body, a plurality of clamping holes are arranged on the circumference of the side wall of the upper cover, the clamping holes of the upper cover are coupling with the corresponding barbs 51 on the outer side wall of the body in a clamping manner.

The sealing piece is a cap structure with through holes, and comprises a cap body and a side wall, the first convex ring is arranged on the cap body, the second convex ring is arranged on the outer side wall of the side wall; and the sealing piece is sleeved to the groove on the bottom part of the plunger, and the thickness of the cap body of the sealing piece is smaller than the width of the groove, and the coupling with clearance is formed.

The sealing piece and the first convex ring, the second convex ring are formed in one piece.

The benefits of the present invention are: because a guiding hole is opened on the top surface of the upper cover, and the plunger is sleeved in the guiding hole in a moving manner, and its bottom part extends into the cavity of the body; a groove is opened at the bottom part of the plunger, and the sealing piece is coupling in the groove in a moving manner, and coupling with the inner side wall of the body in a sealing manner; the spring is arranged between the bottom end of the plunger and the inner bottom wall of the body; so that after the plunger is pressed down, the airflow channel between the sealing piece and the plunger is closed, and the air flow is pressed out of the air outlet of the body; after the plunger is loosen, the airflow channel between the sealing piece and the plunger is opened, and the automatically reinflation to the cavity of the body is achieved, and the button rebounds quickly under the returning force of the spring. Obviously, the present invention is provided with sensitive reinflation, simple structure and good reliability.

With the following description of the drawings and specific embodiments, the invention shall be further described in details; but the pneumatic button with reinflation structure in the present invention is not limited by the embodiment.

### BRIEF DESCRIPTION OF THE DRAWINGS

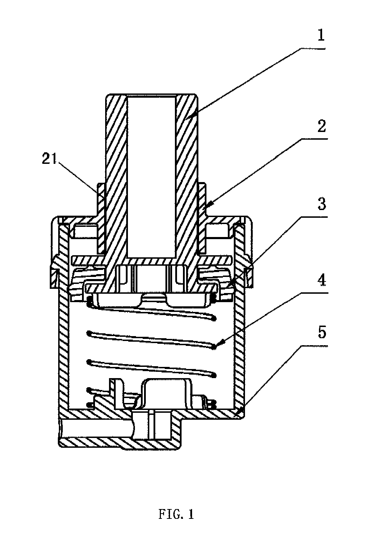

FIG.1 shows the sectional view of the present invention;

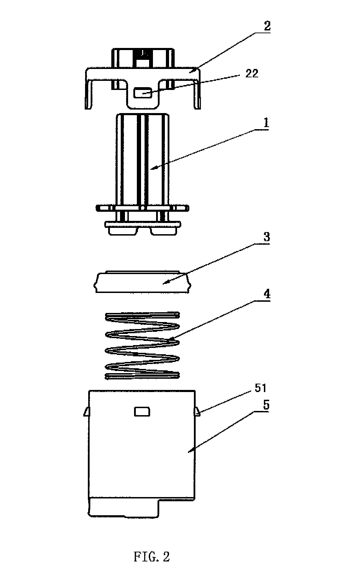

FIG.2 shows the solid exploded view of the present invention;

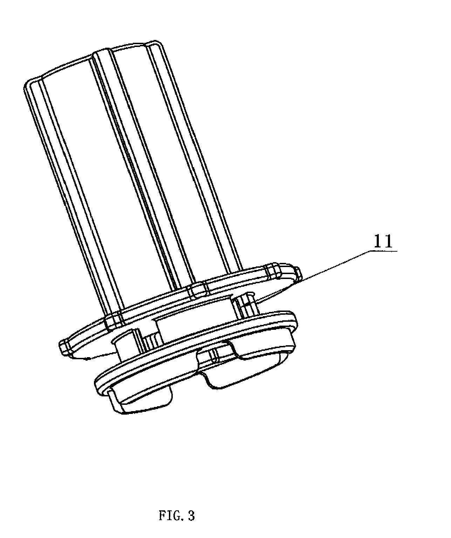

FIG.3 shows the solid structure view of the plunger of the present invention;

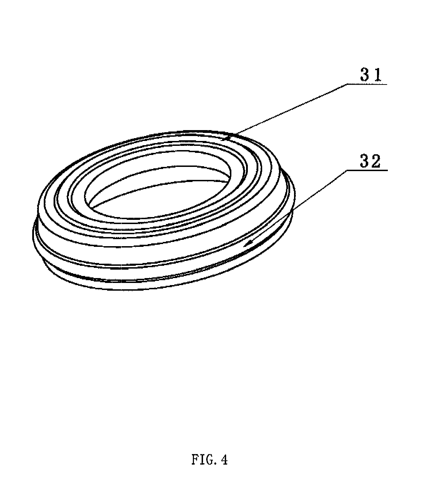

FIG.4 shows the solid structure view of the sealing piece of the present invention;

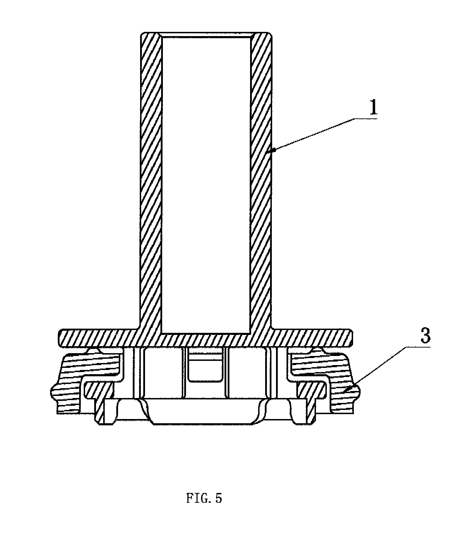

FIG.5 shows the abridged general view of state of the plunger and the sealing piece when the airflow channel is sealed;

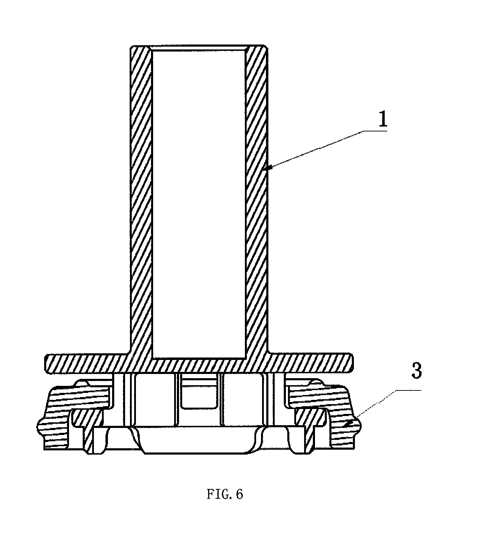

FIG.6 shows the abridged general view of state of the plunger and the sealing piece when the airflow channel is opened;

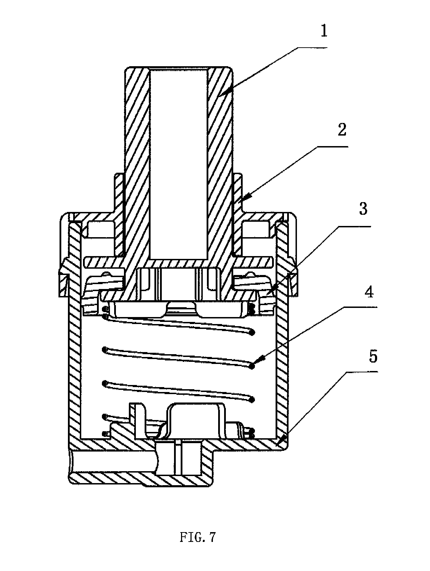

FIG.7 shows the abridged general view of the initial state of the present invention;

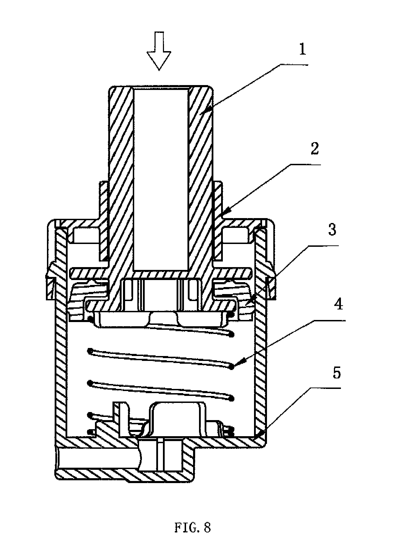

FIG.8 shows the abridged general view of the state of the present invention when the button is slightly pressed down;

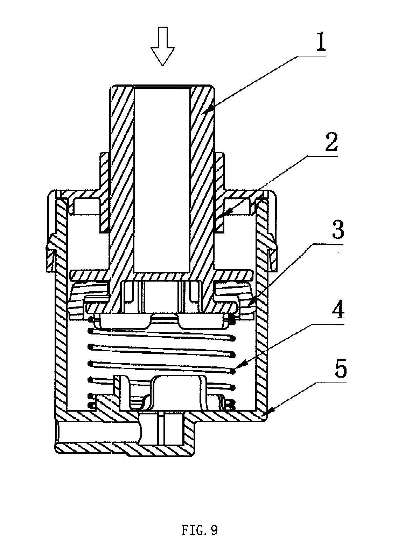

FIG.9 shows the abridged general view of the state of the present invention when the button is completely pressed down;

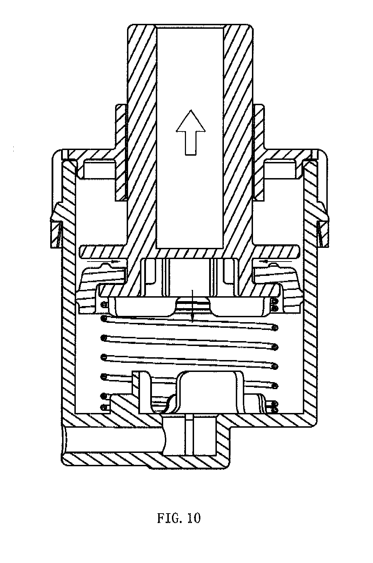

FIG.10 shows the abridged general view of the state of the present invention and the airflow after the button is loosen;

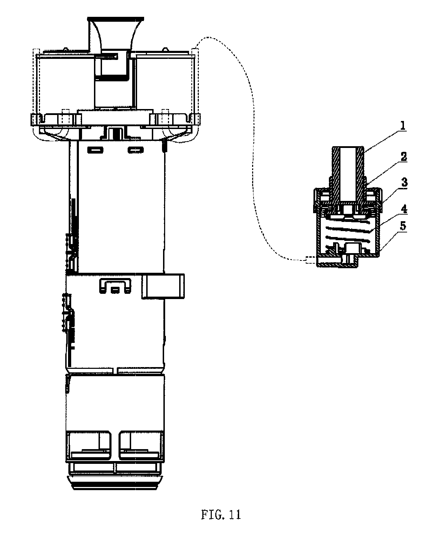

FIG.11 shows the abridged general view of the present invention
when the present invention is connected with the drain valve through a tube.

### DESCRIPTION OF THE PREFERRED EMBODIMENTS

The embodiment is according to the figures, the pneumatic button with reinflation structure in the present invention comprises a plunger 1, an upper cover 2, a body 5, a spring 4 and a sealing piece 3; a button (not shown in figures) is arranged on the top of the plunger 1; the upper cover 2 is fixedly connected to the body 5; an air outlet is arranged at the bottom end of the body 5; the spring 4 is arranged in the cavity of the body 5; a guiding hole 21 is opened on the upper cover 2, the plunger 1 is sleeved in the guiding hole 21 in a moving manner, and the bottom part of the plunger 1 extends into the cavity of the body 5; the spring 4 is arranged between the bottom end of the plunger 1 and the inner bottom wall of the body 5; a groove 11 is arranged around the circumference of the bottom of the plunger 1, and the sealing piece 3 is coupling in the groove 11 in a moving manner, so that the sealing piece 3 can slides on the inner wall of the body 5 in a sealing manner along with the moving of the plunger 1, coupling with the groove wall of the groove 11 to generate sealed or opened airflow channel.

Wherein,

It further comprises a first convex ring 31 which is arranged on the top surface of the sealing piece 3 and is coupling below the upper groove wall of the groove 11 to leave or be against the upper groove wall of the groove 11 along with the up and down movement of the plunger 1; herein, the first convex ring can also be arranged in the upper groove wall of the groove 11; when the first convex ring can also be arranged in the upper groove wall of the groove 11, the first convex ring leaves or is against the top surface of the sealing piece 33 along the up and down movement of the plunger 1;

The sealing piece 3 is coupling with the groove bottom of the groove 11 with clearance; and an air inflow structure is arranged in the groove 11; in the present embodiment, the air inflow structure is one or plurality of through holes arranged at the groove bottom of the groove 11; a countersink is upward opened on the bottom surface of the plunger 1; the through holes of the groove 11 are communicated with the countersink; besides, the air inflow structure also can be one or plurality of slots which are arranged on the lower groove wall of the groove along the radial direction.

A second convex ring 32 is arranged on the outer side wall of the sealing piece 3, which is coupling with the inner side wall of the body 5 in a sealing manner;

The sealing piece 3 is a cap structure with through holes, and comprises a cap body and a side wall, the first convex ring 31 is arranged on the cap body, the second convex ring 32 is arranged on the outer side wall of the side wall; and the sealing piece 3 is sleeved to the groove 11 on the bottom part of the plunger, and the thickness of the cap body of the sealing piece is smaller than the width of the groove, and the coupling with clearance is formed; the sealing piece 3 and its first convex ring 31, its second convex ring 32 are formed in one piece.

A plurality of barbs 51 are arranged on the circumference of the top part of the outer side wall of the body 5, a plurality of clamping holes 22 are arranged on the circumference of the side wall of the upper cover 2, the clamping holes 22 of the upper cover 2 are coupling with the corresponding barbs 51 on the outer side wall of the body in a clamping manner.

The pneumatic button with reinflation structure in the present invention, because the sealing piece 3 is sleeved in the groove 11 of the plunger 1 in a sliding manner, a airflow channel is formed among the clearance between the groove wall of the groove 11 and the sealing piece 3, the through holes on the groove bottom of the groove and the countersink on the bottom end of the plunger to reinflate the cavity of the body 5 from outside when the sealing piece 3 leaves the groove wall of the groove 11. When the button is slightly pressed down, because the sealing piece 3 is coupling with the body 5 in a sealing manner, the sealing piece 3 is relatively still to the body 5, and the plunger 1 moves downward along the guiding hole 21 driven by the pressure, so that the upper groove wall of the groove 11 is against the first convex ring 31 of the sealing piece. Keep pressing the button down, the pressure of the button overcomes the frictional force between the sealing piece 3 and the body 5, and the sealing piece 3 moves downward along with the plunger 1 to press air out of the cavity of the body 5 from the air outlet, pressing the spring 4. At the moment, because the air outlet of the body 5 is connected with the drain valve through tube, the gas in the cavity of the body 5 can flow to the drain valve through the tube to achieve the draining function of the drain valve.

After the button is loosen, the sealing piece 3 and the body 5 keep still at initial state because of the frictional force, and the plunger 1 moves upward under the restoring force of the spring 4, so that the first convex ring 31 of the sealing piece 3 leaves the upper groove wall of the groove 11 of the plunger 1, and the airflow channel is opened, and the cavity of the body 5 is communicated with the outside, if the air in the cavity of the body is not enough, the outer air will enter the cavity of the body 5 along the opened airflow channel from the clearance between the side wall of the plunger 1 and the guiding hole 21, then the air in the cavity of the body is balanced. Under the returning force of the spring 4, the plunger 1 eventually moves upward, driving the sealing piece 3 along with itself, and keep the airflow channel open, and the plunger 1 can reset smoothly and quickly.

The invention has been described with reference to the preferred embodiments mentioned above; therefore it cannot limit the reference implementation of the invention. It is obvious to a person skilled in the art that structural modification and changes can be carried out without leaving the scope of the claims hereinafter and the description above.

### INDUSTRIAL APPLICABILITY

The pneumatic button with reinflation structure in the present invention, after the plunger is pressed down, the airflow channel between the sealing piece and the plunger is closed, and the air flow is pressed out of the air outlet of the body; after the plunger is loosen, the airflow channel between the sealing piece and the plunger is opened, and the automatically reinflation to the cavity of the body is achieved, and the button rebounds quickly under the returning force of the spring. Obviously, the present invention is provided with sensitive reinflation, simple structure, good reliability and good industrial applicability.

## Claims

1. A pneumatic button with reinflation structure, comprises a plunger, an upper cover, a body and a spring; the upper cover is fixedly connected to the body; an air outlet is arranged at the bottom end of the body; the spring is arranged in the cavity of the body; wherein, also comprises a sealing piece; a guiding hole is opened on the upper cover, the plunger is sleeved in the guiding hole in a moving manner, and the bottom part of the plunger extends into the cavity of the body; the spring is arranged between the bottom end of the plunger and the inner bottom wall of the body; a groove is arranged around the circumference of the bottom of the plunger, and the sealing piece is coupling in the groove in a moving manner, so that the sealing piece can slides on the inner wall of the body in a sealing manner along with the moving of the plunger, coupling with the groove wall of the groove to generate sealed or opened airflow channel.

2. A pneumatic button with reinflation structure according to claim 1, wherein, further comprises a first convex ring which is arranged between the top surface of the sealing piece and the upper groove wall of the groove to seal or open the airflow channel along with the up and down movement of the plunger.

3. A pneumatic button with reinflation structure according to claim 2, wherein, the first convex ring is arranged on the top surface of the sealing piece and is coupling below the upper groove wall of the groove to leave or be against the upper groove wall of the groove along with the up and down movement of the plunger.

4. A pneumatic button with reinflation structure according to claim 2, wherein, the first convex ring is arranged under the upper groove wall of the groove, and the first convex ring leaves or is against the upper groove wall of the groove along the up and down movement of the plunger.

5. A pneumatic button with reinflation structure according to claim 1, wherein, the sealing piece is coupling with the groove bottom of the groove with clearance; and an air inflow structure is also arranged in the groove.

6. A pneumatic button with reinflation structure according to claim 5, wherein, the air inflow structure is one or plurality of through holes arranged at the groove bottom of the groove; a countersink is upward opened on the bottom surface of the plunger; the through holes of the groove are communicated with the countersink.

7. A pneumatic button with reinflation structure according to claim 5, wherein, the air inflow structure also can be one or plurality of slots which are arranged on the lower groove wall of the groove along the radial direction.

8. A pneumatic button with reinflation structure according to claim 1, wherein, a second convex ring is arranged on the outer side wall of the sealing piece, which is coupling with the inner side wall of the body in a sealing manner.

9. A pneumatic button with reinflation structure according to claim 1, wherein, a plurality of barbs are arranged on the circumference of the top part of the outer side wall of the body, a plurality of clamping holes are arranged on the circumference of the side wall of the upper cover, the clamping holes of the upper cover are coupling with the corresponding barbs 51 on the outer side wall of the body in a clamping manner.

10. A pneumatic button with reinflation structure according to claim 1, wherein, the sealing piece is a cap structure with through holes, and comprises a cap body and a side wall, the first convex ring is arranged on the cap body, the second convex ring is arranged on the outer side wall of the side wall; and the sealing piece is sleeved to the groove on the bottom part of the plunger, and the thickness of the cap body of the sealing piece is smaller than the width of the groove, and the coupling with clearance is formed.

11. A pneumatic button with reinflation structure according to claim 1, wherein, the sealing piece and the first convex ring, the second convex ring are formed in one piece.
